Europäisches Patentamt

European Patent Office

Office européen des brevets

(11) Publication number: **0 060 692
B1**

# EUROPEAN PATENT SPECIFICATION

(45) Date of publication of patent specification: **04.09.85**

(21) Application number: **82301263.8**

(22) Date of filing: **12.03.82**

(51) Int. Cl.⁴: **C 03 B 7/08,** C 03 B 5/24 //
C03B7/06

(54) **Apparatus and method of conditioning and conveying thermoplastic material.**

(30) Priority: **16.03.81 US 244022
04.11.81 US 317993**

(43) Date of publication of application:
**22.09.82 Bulletin 82/38**

(45) Publication of the grant of the patent:
**04.09.85 Bulletin 85/36**

(84) Designated Contracting States:
**BE DE FR GB IT NL**

(56) References cited:
**GB-A-1 412 599
US-A-2 282 554
US-A-3 580 976**

(73) Proprietor: **Corning Glass Works
Houghton Park
Corning New York 14831 (US)**

(72) Inventor: **Boettner, George Bailey
22 Brown Road
Corning New York 14830 (US)**

(74) Representative: **Fentiman, Denis Richard et al
Elkington and Fife High High Holborn House 52/54
High Holborn
London WC1V 6SH (GB)**

**The file contains technical information
submitted after the application was filed and
not included in this specification**

Courier Press, Leamington Spa, England.

## Description

The present invention relates to an apparatus and a method for conditioning and conveying molten thermoplastic material produced in a melting furnace.

Vertically oriented electric glass melting furnaces have been known in the prior art for some time, but it has been only in the last several years that such furnaces have been brought to large scale commercial application. In more recently developed furnaces, such as the type illustrated in U.S.A. Patent Nos. 2,993,079, 3,524,206, 3,583,861, 3,725,558, 3,742,111, 3,942,968, 4,029,887 and 4,143,232, glass forming batch materials are fed to the upper end of a vertical chamber and refined molten glass withdrawn from the bottom of the chamber. High quality glass is thus produced in a single vertical chamber, with melting occurring in an upper portion thereof and preferably some refining occurring at the bottom portion.

The molten glass withdrawn from the electric furnace is usually received within a laterally extending connected channel situated at one side of the furnace bottom and thereafter directed through a vertical passageway or riser to a mixing chamber and/or a forehearth. In some glass melting systems there is a differential between the glass level in the furnace and the glass level in the forehearth resulting in a measurable hydrostatic head (sometimes hereinafter referred to as pressure or head). Normally, a flow control device or needle located between the furnace and forehearth controls the flow or volume of glass into the forehearth so as to regulate the head.

In a conventional flow control system glass under hydrostatic pressure may ultimately work its way through the refractory joints and bypass the flow control device, with flow control being thereby rendered inoperative. A premature and expensive furnace repair is thus required.

Hydrostatic head may be reduced by changing the difference between glass level in the furnace and forehearth. Alternatively, the head may be dissipated by lengthening the connected channel of the delivery system. Each respective alternative lowers the tendency of the glass to bypass the needle. However, neither alternative is particularly desirable because hydrostatic head is a useful driving force for the glass, and a long connected channel is expensive to build and operate.

US—A—3580976 discloses the use of a heated pipe made of a highly refractory metal, such as molybdenum to deliver molten glass from a furnace. GB—A—1412599 discloses the use of a pipe, which may be heated, to deliver molten glass from a supply thereof, the pipe having a stationary mixing device located therein.

According to the present invention there is provided a furnace delivery apparatus for conditioning relatively hot molten thermoplastic material by controlled dissipation of heat energy therefrom, comprising a pipe for delivery of said thermoplastic material from a source thereof to a desired location and for conditioning the material to a desired homogeneity and temperature upon delivery, said pipe having an inlet for receiving the material therein from said source and an outlet for delivering said material to said desired location, characterized in that it comprises a refractory structure located about the said pipe and defining a chamber which surrounds said pipe and extends between said pipe and said refractory structure, and a heater located in the chamber, surrounding the pipe for supplying heat thereto, said chamber being filled with a supply of thermoplastic material immersing the pipe and heater therein.

The invention further provides a method of conditioning thermoplastic material existing at virtually any condition between a solid relatively cold condition and a molten relatively hot condition comprising the steps of: confining the material to a selected flow path, forming a chamber thereabout, conducting the material along the flow path from an inlet end to an outlet end thereof, regulating the rate of heat energy dissipation from the material along said flow path including the step of at least one of heating said material and heat exchanging and removing heat energy given up by said material along said path, characterized by surrounding the flow path with a concentric annular chamber having wall portions in spaced relation with said flow path, said wall portions defining a space within said chamber, and surrounding the flow path with thermoplastic material for immersing the flow path in said material within said chamber.

The present invention can be used in an arrangement which continues to use a relatively high hydrostatic head as a driving force for the glass without an increase in the length of the delivery system to reduce head at the flow control device.

It is well known in the glass melting and forming art that forehearths require substantial amounts of heat energy in order to condition the glass received from the furnace. Thus, the forehearth is a net consumer of energy and the anomalous condition exists wherein a large amount of heat energy is required to "cool" the glass to the proper forming temperatures. The present invention allows for the use of a smaller and lower energy consuming forehearth.

It is also known that molybdenum metal (moly), a preferred glass contact material used herein, has significantly higher wear resistance to moving molten glass than conventional refractory materials. However, it is also well known that moly tends to oxidize at temperatures in excess of 550—600°C, and thus, the moly must be protected from deleterious atmosphere (oxygen) when it is used at or above these elevated temperatures. The present invention preferably uses moly extensively and provides for its protection.

The present invention performs the functions of transportation, temperature control (preferably cooling) and homogenizing, and preferably flow control of molten thermoplastic material (e.g. glass), in which the useful life of the delivery system is significantly increased and glass-refractory corrosion products, producing glass inhomogeneities and inclusions, are virtually eliminated. Further, the system greatly reduces the net energy required to condition the glass while allowing the use of a relatively stable hydrostatic driving force for the glass through the system.

A flow control device may be provided in flow communication with the outlet of the conduit means for regulating the flow of the thermoplastic material from the furnace at a controlled rate and head. Means is preferably provided for blocking or preventing flow communication between the furnace and the remote location exterior of the conduit means thereby preventing flow of thermoplastic material in bypassing relation with the conduit means. The conduit means, flow control device and blocking means are preferably fabricated of an oxidizable refractory metal and are maintained immersed in thermoplastic material when exposed to temperatures above an oxidation temperature thereof. Heat exchange means may be provided for temperature control of the glass.

In the accompanying drawings:

Figure 1 is a fragmented schematic longitudinal cross sectional elevation of a preferred embodiment of the apparatus of the present invention, and

Figure 2 is a schematic axial cross section of another embodiment of the present invention showing heat exchange means for glass conditioning.

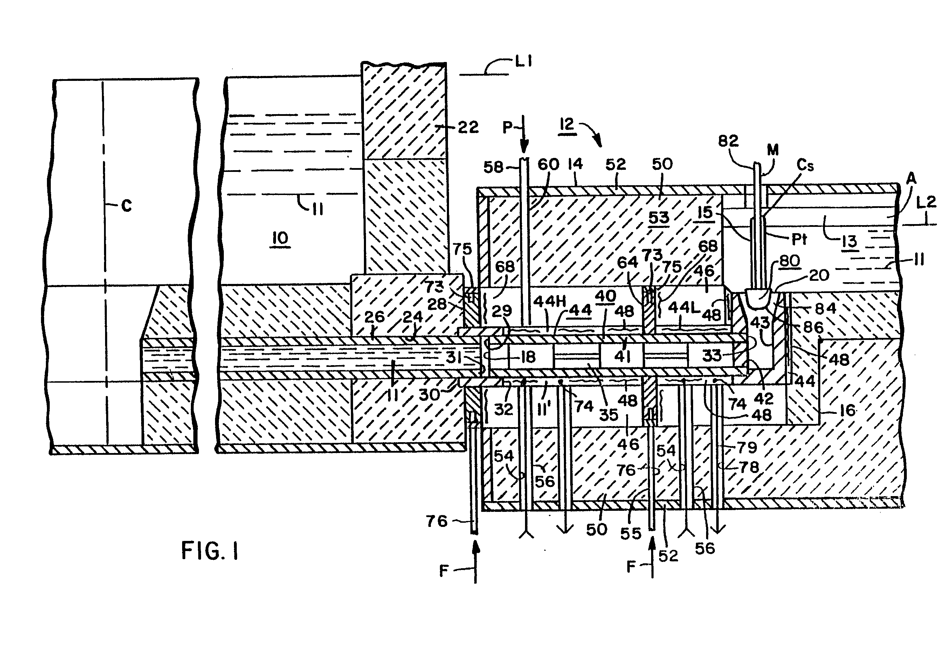

Figure 1 of the drawings shows one embodiment of a delivery system 12 of the present invention for carrying molten thermoplastic material such as glass 11 from a furnace 10 for delivery to a forehearth 13. The delivery system 12 includes a horizontal channel 14, a connected vertical riser 16, and respective inlet and outlet ends 18 and 20. The inlet 18 is preferably coupled to furnace 10 and the outlet 20 is preferably adapted to a coupled to forehearth 13 or other downstream connecting channels and the like. A needle or flow control device 15 may be located at the outlet 20 to control the flow of thermoplastic material or glass 11 from the furnace 10 through the delivery system 12 into the forehearth 13.

Furnace 10 includes an upstanding sidewall portion 22 having a through opening 24 therein. An outlet pipe 26, which may extend to the centre C of the furnace 10, is located within said opening 24. Sleeve 30 may be fitted over an outlet end 31 of outlet pipe 26. A first flange 28, peripherally attached about said sleeve 30, seals the opening 24 exterior of the furnace 10. An outlet end 32 of the sleeve 30 extends beyond the first flange 28 for sleevable connection to the delivery system 12.

The outlet pipe 26, sleeve 30 and first flange 28 are preferably manufactured of materials which are highly corrosion resistant. While, in the present invention, a refractory metal such as moly is preferred, other materials such as tungsten, tantalum, rhenium, columbium, steel or alloys thereof may be used. Also noble metals, such as platinum, and rhodium or alloys thereof may be used where appropriate.

In the preferred embodiment of the present invention, the delivery system 12 includes an internal conduit, pipe means or flow path 40 which comprises a horizontal cylindrical pipe 41 and vertical cylindrical well 43 having opening 42 therein. Cylindrical pipe 41 has an inboard end 29 slidably and loosely fitted into sleeve 30 of outlet pipe 26, and an outboard end 33 secured in opening 42 of well (e.g., by threading or force fitting). Mixer elements 35 are located axially of pipe 41 to shear the glass 11 for thermally and physically homogenizing it as it passes through conduit 40. A refractory brick structure 46 surrounds conduit 40 in a spaced relation thereby providing an annular chamber or space 44 about the conduit 40 (i.e. pipe 41 and well 43). The refractory brick structure 46 may be manufactured of a glass contact material such as Corhart UNICOR I. A layer of insulation 50 surrounds the refractory brick structure 46. An outer shell or housing 52 covers the insulation 50 and defines an interior chamber 53. Heaters 48, which may be electrically powered, are located in space 44, Water cooled electric power connectors 56 are coupled to the heaters 48 and pass through openings or passageways 54 in insulation 50, shell 52 and refractory brick structure 46.

A second flange 64 is secured to and located about the pipe 41 near the outboard end 33. The second flange 64 extends across the annular chamber 44 and into the refractory structure 46 thereby splitting or segmenting the chamber 44 into respective relatively high and low pressure sections or sides 44H and 44L, the purpose of which will be explained hereinafter.

As mentioned previously, pipe 41 and well 43 are preferably manufactured from a highly corrosion resistant refractory metal such as molybdenum. Although other materials may be used, it has been found that molybdenum is more easily or cheaply fabricated than other refractory metals and is highly resistant to the effects of flowing thermoplastic material such as glass. Because moly oxidizes at above 550°C, and glass 11 entering the delivery system 12 may be at temperatures exceeding 2100°C, means is provided for protecting moly from oxidation. The interior of the conduit 40 is protected from oxidation by the presence of the glass 11 from the furnace 12. Exterior of the conduit 40, the space 44 may be prefilled with a mixture of glass cullet 11'. When melted, the cullet 11' forms a layer of protective material about conduit 40. The high pressure side 44H of chamber 44 may also receive molten glass 11 from the furnace 10 via the relatively loosely fitting connection of sleeve 30 and the inlet 18 of conduit 40. The low pressure side 44L of chamber 44 surrounding a portion of pipe 41 and well 43 is in communication with the forehearth 13. Glass 11 in the forehearth 13 can enter the lower pressure side 44L of chamber 44 about pipe 41 and well 43 near the outlet end 20 of the conduit. The glass and cullet 11', surrounding the conduit 40 in chamber 44, tends to stagnate and remain trapped therewithin, thus preventing possible refractory contamination from entering the conduit 40 and being used to make product.

The conduit 40 expands and contracts due to thermal cycling of the system. Such dimensional change may, if not accommodated, produce undue stress on the system components and cause a failure. The sleeve 30 coupling outlet pipe 41 of conduit 40 accommodates some of the expansion and contraction of the respective components. Also, the conduit 40 may be made relatively short so that, in the temperature ranges contemplated, the maximum swings in dimensions do not exceed the tolerances of the system.

It should be understood that other arrangements for connecting the furnace 10 and delivery system are possible besides the sleeve 30 between outlet pipe 28 and conduit 40. However, for purposes of repair and the like, the arrangement herein described is preferred because of the relative ease with which a break or separation may be made between the aforementioned components.

A plurality of the heaters 48 may be located immersed in the cullet 11' within the annular chamber 44 to provide proximate heating thereto and thereby control the temperature of glass 11 within said conduit 40. The heaters 48 may be commercially available mesh, rod, plate and ribbon devices. A variety of suitable materials are available for manufacture of the heaters 48 including moly, tungsten and platinum. In addition to providing heat input to the glass 11 within conduit 40, the heaters 48 are used for initially melting the cullet 11' within the chamber 44. The heaters 48 may also serve a dual purpose and be used as electrodes for joule effect heating of the glass 11 by changing the power supplied thereto. Although connections are not shown, conduit 40 may be electrified to act as a heater.

The insulation layer 50 may be selectively varied in thickness and type in order to provide a heat regulation function depending upon the glass composition and operating characteristics of the system 12.

Flange heater 68 may be located adjacent the respective first and second flanges 28 and 64 to provide some supplemental heat for start up. Although flange heaters 68 are normally shut down subsequent to start up, they could be used for glass temperature control if needed. The flange heaters 68 may be coupled to a source of electricity via means similar to connectors 56 (not shown).

Cooling notches 73, formed in each respective first and second flange 28 and 64, are sealed by peripheral end plates 75. Cooling notches 73 may be coupled to an external source of cooling fluid F (inert gas or liquid) via appropriate plumbing 76. Appropriate openings 55 in housing 52, insulation 50 and refractory structure 46 may be provided as necessary for plumbing 76. Glass 11 and cullet 11', proximate the respective first and second flanges 28 and 64 and closely adjacent structures, becomes frozen or at least highly viscous and thus creates a glass tight seal to prevent glass leakage thereby. Also, since it is preferred that respective first and second flanges 28 and 64 are fabricated from moly, the cooling provided by cooling fluid F circulated through cooling notches 73 reduces the temperature of the flanges 28 and 64 below the oxidation temperature of the moly.

A purge line 58 passing through an opening 60 in the housing 52, insulation 50 and refractory structure 46 provides an inlet for purge gas P into the space 44. The purge gas P may also be allowed to infiltrate to the chamber 53. The reason for the introduction of purge gas P is that, before start up, oxygen contaminants will undoubtedly be trapped within the housing 52. If, as preferred, moly is used to fabricate the conduit 40, flanges 28 and 64 and heaters 48 and 68, oxygen should be thoroughly purged to avoid risk of destroying the oxidizable components. After start up when the glass 11' in the space 44 melts, the purge P is no longer required.

One or more thermo-couples 74 may be located at various points along conduit 40 in openings or passageways 78 in housing 52, insulation 50 and refractory 46. The thermo-couples 74 provide output signals over connecting wires 79 indicative of the temperature of the conduit 40 and the glass 11 contained therein. Each of the heaters 48 may be separately controlled to regulate the heat input into the system all along conduit 40 in response to outputs of thermo-couples 74. Thus, temperature gradients in the glass 11 may be moderated and localized hot spots may be prevented.

Flow control and pressure regulation of the glass 11 is provided by flow control device or needle 80 and well 43. The needle 80 may be virtually reciprocally supported from above by rod 82. Well 43 has a contoured inner flow surface 84 and needle 80 has a correspondingly shaped working surface in variable spaced relation therein. The needle 80 and well 43 cooperate to restrict the flow of glass 11 into the forehearth 13 and to relieve or dissipate hydrostatic pressure of the glass 11. The rod 82 carrying the needle 80 may be controlled by conventional means not shown.

In the furnace 10, the glass 11 has a selected operating level $L_1$. In the forehearth 13, the glass is maintained at a second lower level $L_2$. The position of the needle 80 relative to the well 43 is regulated to establish the forehearth glass level $L_2$ against the hydrostatic head provided by the high glass level $L_1$ of the furnace. The difference in glass levels ($L_2—L_1$) or head may be a number of feet, typically 61—152 centimetres (2—5 feet).

In order to reduce costs, the length of the conduit 40 from inlet 18 to outlet 20 should be relatively short (i.e. 183 centimetres or 6 feet). A short flow path does not greatly reduce the effects of head. Therefore, it is preferable to provide a conduit 40 with a reduced diameter in order to introduce flow resistance into the system and thereby dissipate the head. The diameter of the conduit is preferably about 127 millimetres (5 inches).

The sizing of the conduit 40 and positioning of the needle 80 within well 43 provides sufficient effective head reduction adequately to control the glass level $L_2$ in the forehearth 13. The present invention, therefore, allows the use of available glass head to move glass 11, and at the same time reduces cost and system size by means of a conduit 40 with a reduced flow radius.

Hydrostatic pressure in the high pressure side 44H of chamber 44 upstream of second flange 64 is relatively higher than the pressure downstream thereof in low pressure side 44L. This is because the high pressure side 44H is in communication with the glass 11 in the furnace 10 at upper level $L_1$. The low pressure side 44L is in communication with glass 11 in the forehearth 13 which is at the lower level $L_2$. The second flange 64 effectively separates or isolates the pressure differential. Thus, glass 11 in the furnace 10 cannot enter the low pressure side 44L of the chamber 44 and bypass well 43 and needle 80. Further, since the conduit 40 is primarily fabricated from corrosion resistant materials and virtually glass tight, none of the glass 11 in the furnace 10 and conduit 40 can work its way past the well 43. Such a condition would result in a failure of the flow control and cause defects in the glass from refractory inclusions resulting from structural wear. The moly conduit 40 has containment strength and high corrosion resistance thereby reducing system repair and maintenance requirements.

Normally, the atmosphere A above the glass level $L_2$ in the forehearth 13 is at an elevated temperature. Consequently, the control rod 82 must be protected. The control rod 82 may be formed of composites (shown schematically) including an inner moly rod M for strength and a ceramic sleeve Cs thereabout which, in turn, has an exterior platinum shield Pt thereabout. The ceramic Cs protects the moly from the heat, and the platinum Pt, in contact with glass 11, protects the ceramic Cr from the glass corrosion especially near the glass level L.

The flow control provided by needle 80 and well 43 makes hydrostatic head available for moving the glass 11. The use of conduit 40 to carry the glass 11 provides a system which is virtually leak proof thereby rendering the flow control reliable. The conduit 40 is impervious to contamination by corrosion or outgassing of the refractory structure 46 thereby enhancing glass quality, since refractory contamination produces cord and inclusions in the glass. Further, volatilization of the glass composition is inhibited by the use of the conduit 40.

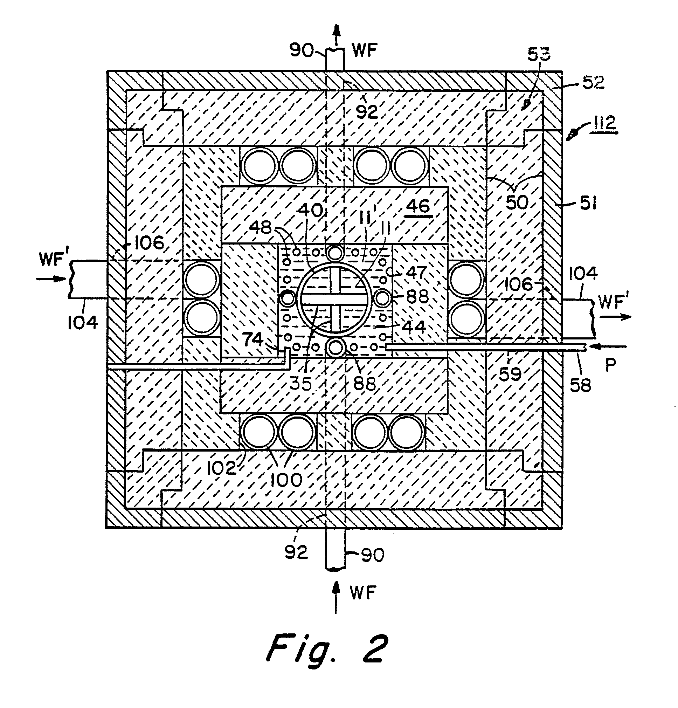

In another embodiment of the present invention, shown in the axial cross section of Figure 2, similar elements are numbered with the same reference numerals with respect to Figure 1. A glass delivery system 112 includes an outer shell or housing 52 defining chamber 53, an insulating blanket 50, a refractory brick structure 46 and an internally located conduit or pipe means 40. An annular chamber or space 44 is defined between conduit 40 and internal walls 47 of refractory structure 46. The annular space 44 is filled with glass cullet 11' which becomes molten after the system is in operation. Heaters 48 are located within the annular chamber 44 for the purposes hereinbefore described. It should be noted that in either embodiment, conduit 40 could be electrified directly by one or more connections to act as a heater in lieu of or as a supplement to the separate heaters 48. Mixer elements 25 similar to those described in reference to Figure 1 are located axially of conduit 40.

Inner cooling pipes 88 preferably manufactured of moly and carrying a working fluid WF, may be located within the space 44 about the conduit 40 axially aligned therewith and tangentially centering it within refractory structure 46 as shown. Inlet/outlet pipes 90 are suitably manifolded with the inner cooling pipes 88 to conduct the working fluid WF into and out of each said inner cooling pipes 88 via openings 92 in ths housing 52, insulation 50 and refractory 46. The inner cooling pipes 88 being proximate the conduit 40 may be operated so as to provide for sharp changes in the temperature of the glass 11 within the conduit 40 if such control is required.

Outer cooling pipes 100 are located in recesses 102 of the refractory brick structure 46. These outer pipes 100 are manufactured of refractory tubing such as alumina or a high temperature steel alloy and are similarly suitably manifolded for receiving a second source of working fluid WF' via connector pipes 104 in openings 106 of the housing 52, insulation 50 and refractory 46.

As can be fully appreciated from the drawing, the outer cooling pipes 100 are significantly larger in diameter than the inner pipes 88 mentioned above. The reason for this is that the outer pipes 100 are adapted to carry relatively large volumes of working fluid WF in comparison to inner pipes 88. Consequently, outer pipes 100 carry a greater proportion of the heat exchange or cooling load for the system as a whole over longer periods of time than the inner pipes 88. Furthermore, because of their proximity to the conduit 40, inner pipes are designed to more rapidly or instantaneously affect the temperature of conduit 40 and glass 11 therein, as well as the glass 11' in annular space 44. The greater volume of working fluid WF' available for the outer pipes 100 enables the system to the operated over a greater range of heating and cooling loads. Operating together, the respective inner and outer cooling pipes 88 and 100 provide means for relatively stable and versatile control of the system. Each working fluid WF and WF' should be inert relative to the respective inner and outer cooling pipes 88 and 100 through which they flow. For simplified operation each working fluid WF and WF' could be the same composition.

The delivery system 112 shown in Figure 2 is more versatile than the system of Figure 1 because of the provision for respective inner and outer cooling pipes 80 and 100. However, each system can be more or less complex depending on needed results. The incorporation of the respective inner and outer cooling pipes 88 and 100, heaters 48, mixing devices 43 and the like depends on system application.

In any of the embodiments described herein, insulation 50 surrounding the refractory brick structure 46 may be selectively removed in part to regulate heat dissipation differentially. This may be accomplished by means of removable panel and insulation portions 51 of housing 52. Thus, the present invention may be adapted for multiple uses.

The present invention is rather simple and compact in its design dimensions. For example arrangements shown in Figure 1 and 2 may be less than 61 centimetres by 61 centimetres (2 feet x 2 feet) in axial cross section, with a length dimension being dependent upon the parameters of the materials to be melted and the space requirements of the facility.

While there has been described what at present are considered to be the preferred embodiments of the present invention, it will be apparent to those skilled in the art that various changes and modifications may be made therein without departing from the scope of the claims.

**Claims**

1. A furnace delivery apparatus for conditioning relatively hot molten thermoplastic material (11) by controlled dissipation of heat energy therefrom, comprising a pipe (41) for delivery of said thermoplastic material from a source (10) thereof to a desired location (13) and for conditioning the material to a desired homogeneity and temperature upon delivery, said pipe (41) having an inlet (29) for receiving the material therein from said source and an outlet (33) for delivering said material to said desired location, characterized in that it comprises a refractory structure (46) located about the said pipe (41) and defining a chamber (44) which surrounds said pipe and extends between said pipe and said refractory structure, and a heater (48) located in the chamber, surrounding the pipe for supplying heat thereto, said chamber being filled with a supply of thermoplastic material immersing the pipe and heater therein.

2. A delivery apparatus as claimed in claim 1, wherein said refractory structure (46) has openings and fluid passageways (88, 100) therethrough for circulation of a heat exchange fluid therein.

3. A delivery apparatus as claimed in claim 1 or 2, further characterized by means for protecting surfaces of the refractory structure (46) and the pipe (41) which form inside surfaces of the chamber (44) from deleterious ambience, including passage means (58) for supplying said chamber with a purge fluid (P) which is relatively inert with respect to the structure and the pipe.

4. A furnace delivery apparatus as claimed in claim 1, comprising heat exchange means (88, 100) disposed in spaced relation about said pipe (41), means (100) for conveying a first gaseous fluid (WF') in said heat exchange means in heat exchange relation therewith and the pipe, and heat insulating means (50) surrounding said heat exchange means, whereby said heater (48), said means for conveying the first gaseous fluid within said heat exchange means and said heat insulating means functioning in combination to produce means for governing the temperature of the thermoplastic material (11) to provide the desired thermal homogeneity as it passes through said pipe.

5. A delivery apparatus as claimed in claim 4, wherein said means for conveying said first gaseous fluid (WF') comprises a plurality of first cooling pipes (100) axially supported in recesses (102) in said refractory structure (46) and being spaced apart from said pipe (41) for carrying the first fluid.

6. A delivery apparatus as claimed in claim 5, comprising means (88) within said closed chamber (44) for conveying a second gaseous fluid (WF) in heat exchange relation with said pipe (41).

7. A delivery apparatus as claimed in claim 6, wherein said means for conveying the second fluid (WF) includes a plurality of second cooling pipes (88) located axially adjacent the pipe (41) and tangentially centering same within said closed chamber (44).

8. A delivery apparatus as claimed in claim 7, wherein the first cooling pipes (100) are diametrically larger than the second cooling pipes (88), the first working fluid (WF') carrying a significantly larger portion of heat exchange load produced by the thermoplastic material (11) than the second working fluid (WF) and the second working fluid carrying a greater instantaneous change in heat load than the first working fluid.

9. A delivery apparatus as claimed in any preceding claim, further characterized by stationary shearing means (35) located within said pipe (41) for homogenizing the consistency of the thermoplastic material (11) passing therethrough.

10. A delivery apparatus as claimed in any preceding claim, wherein said pipe (41) is made of a corrosion resistant material, a noble metal, or the like.

11. A delivery apparatus as claimed in any one of claims 1 to 9, wherein said pipe (41) is a metal selected from the group consisting of molybdenum, tungsten, tantalum, rhenium, columbium, steel or alloys thereof, and the like.

12. A delivery apparatus as claimed in any preceding claim, wherein the heater (48) comprises a plurality of heater elements located near with said pipe (41) for providing heat input thereto.

13. A delivery apparatus as claimed in any preceding claim, wherein the heater (48) comprises a portion of said pipe (41) connected with a source of electrical power.

14. A delivery apparatus as claimed in any preceding claim including electrode means located in communication with said chamber (44) for providing electrical joule heating energy through said thermoplastic material (11).

15. A delivery apparatus as claimed in any preceding claim, including expansion means (30) in communication with at least one end (29) of said pipe (41) being adapted to accommodate relative motion of the pipe and heat exchange structure through thermal cycling of the apparatus.

16. A delivery apparatus as claimed in claim 15, wherein said expansion means comprises a sleeve connection (30) between said pipe (41) and said source (10).

17. A delivery apparatus as claimed in any preceding claim, including a flange (28) supportively coupled about at least one of the inlet (29) and outlet (33) of said pipe (41), said flange extending radially outward thereof in communication with said structure (46) for sealingly closing the chamber (44).

18. A delivery apparatus as claimed in claim 17, including flange cooling means (73) located in thermal communication with at least a circumferential portion thereof.

19. A delivery apparatus as claimed in claim 4, or any one of claims 5 to 18 as dependent thereon, wherein the heat insulating means (50) is selectively arranged about the heat exchange means (88, 100) for differentially regulating heat energy along said pipe (41).

20. A delivery apparatus as claimed in any preceding claim further comprising flow control means (80, 43) in communication with said pipe (41) for regulating the flow of the thermoplastic material (11) from the source (10).

21. A delivery apparatus as claimed in claim 20, comprising at least one flange (64) supportively coupled about the pipe (41), said flange extending radially outwardly thereof in communication with the structure (46) for segmenting the chamber (44) into separate portions (44H, 44L).

22. A delivery apparatus as claimed in claim 21, wherein the thermoplastic material (11) exerts a hydrostatic pressure differential between the inlet (29) and outlet (33) of the pipe (41) for driving the thermoplastic material in a direction from relatively higher to relatively lower hydrostatic pressure, and the flange (64) blocks flow of the thermoplastic material in the chamber (44) from one separate portion (44H) to the other (44L).

23. A delivery apparatus as claimed in claim 21 or 22, wherein the flange (64) includes a cooling passageway (73) in communication with a source of cooling fluid (F) for lowering the temperature of the flange below a selected operating temperature thereof and reducing the temperature of thermoplastic material (11) in the vicinity thereof such that it forms a seal between the flange and the structure (46).

24. A delivery apparatus as claimed in any one of claims 20 to 23, wherein the flow control device comprises a well (43) having a flow control surface (84), a needle (80) having a working surface (86) located in reciprocal spaced relation with said flow control surface (84), and means (82) for regulating the position of the needle relative to the well for varying the spaced relation therebetween and thereby regulating the hydrostatic pressure of the thermoplastic material (11).

25. A delivery apparatus as claimed in claim 24, wherein the means for regulating the position of the needle ·(80) comprises a control rod (82) engaging a portion of the needle in opposition to the working surface (86) thereof for moving said needle reciprocally.

26. A delivery apparatus as claimed in claim 25, wherein said needle (80), a well (43) and control rod (82) are fabricated from oxidizable refractory metals selected from the group consisting of molybdenum, tungsten, tantalum, rhenium, columbium, steel and alloys thereof.

27. A delivery apparatus as claimed in claim 26, wherein said control rod (82) comprises an elongate rod adapted to be partially immersed in the thermoplastic material (11) and coupled to the needle (80) at a distal end of said rod, said rod extending through an upper surface of the thermoplastic material to be exposed to a relatively hot ambience, said rod further including a refractory sleeve (Cs) surrounding same at least over a portion thereof near the upper surface of the thermoplastic material for shielding the rod from ambience, and a noble metal shield (Pt) covering the refractory sleeve for protecting same from corrosion by the thermoplastic material.

28. A delivery apparatus according to any preceding claim, adapted for the delivery of molten glass.

29. A method of conditioning thermoplastic material (11) existing at virtually any condition between a solid relatively cold condition and a molten relatively hot condition comprising the steps of confining the material to a selected flow path (41), forming a chamber (44) thereabout, conducting the material along the flow path from an inlet end (29) to an outlet end (33) thereof, regulating the rate of heat energy dissipation from the material along said flow path including the step of at least one of heating said material and heat exchanging and removing heat energy given up by said material along said path, characterized by surrounding the flow path with a concentric annular chamber (44) having wall portions in spaced relation with said flow path, said wall portions defining a space within said chamber, and surrounding the flow path with thermoplastic material for immersing the flow path in said material within said chamber.

30. A method as claimed in claim 29, including the step of introducing a gaseous substance (P) into said chamber (44) proximate said flow path (41) for protecting same from deleterious ambience.

31. A method as claimed in claim 29 or 30 including the step of introducing said hot material (11) at the path inlet (29) at a relatively nonuniform temperature distribution across said path and wherein the temperature of the material introduced is relatively hot up to about 2100°C.

32. A method as claimed in any one of claims 29 to 30 including the step of accommodating thermal expansion of the flow path (41) relative to inlet (29) and outlet (33) ends thereof.

33. A method as claimed in any one of claims 29 to 32, including the step of shearingly impeding the flow of said material (11) along said flow path (41).

34. A method as claimed in any one of claims 29 to 33, wherein the step of heating the material (11) includes at least one of the steps of supplementing heat carried by said material and heating the material to a molten state from a cold solid condition.

35. A method as claimed in any one of claims 29 to 34, wherein the flow path (41) is selectively insulated for regulating the rate of heat dissipation therealong.

36. A method as claimed in any of claims 29 to 35, wherein the step of heat exchanging and removing heat given up by said material (11) along said flow path (41) is carried out by means comprising at least first and second means (100, 88) for conveying respective working fluids (WF, WF') in heat exchange relation with the flow path, the first one (100) of said means carrying a significantly greater portion of heat exchange load produced by the material than the second means (88), said second means carrying a greater instantaneous change in heat load than the first means.

37. A method as claimed in any one of claims 29 to 36, further comprising the step of blocking flow of said thermoplastic material (11) exterior of the flow path (81) from the inlet end (29) to the outlet end (33) thereof.

38. A method as claimed in any one of claims 29 to 37, further including the step of regulating the flow of thermoplastic material (11) in the flow path (41) from the inlet end (29) to the outlet end (33) thereof.

39. A method as claimed in any one of claims 29 to 38, wherein the thermoplastic material (11) is glass.

**Patentansprüche**

1. Abgabevorrichtung für einen Schmelzofen zum Konditionieren von relativ heißem geschmolzenen thermoplastischen Werkstoff (11) durch gesteuerten Wärmeenergieverlust, bestehend aus einem Rohr (41) für die Angabe des thermoplastischen Werkstoffs von einer Quelle (10) desselben an eine gewünschte Stelle (13) und für das Konditionieren des Werkstoffs auf eine gewünschte Homogenität und Temperatur bei der Abgabe, wobei das Rohr einen Einlaß (29) für die Aufnahme des Werkstoffs aus der Quelle und einen Auslaß (33) für das Abgeben des Werkstoffs an die gewünschte Stelle aufweist, gekennzeichnet durch einen feuerfesten Aufbau (46) der um das Rohr (41) herum angeordnet ist und eine Kammer (44) bildet, die das Rohr umgibt und sich zwischen den Rohr und dem feuerfesten Aufbau erstreckt, und durch eine in der Kammer angeordnete Erhitzungseinrichtung (48), die das Rohr für eine Wärmezufuhr zu diesem umgibt, wobei die Kammer mit einer Beschickung aus thermoplastischem Material gefüllt ist, in die das Rohr und die Erhitzungseinrichtung eintauchen.

2. Abgabevorrichtung nach Anspruch 1, dadurch gekennzeichnet, daß durch den feuerfesten Aufbau (46) Öffnungen und Strömungskanäle (88, 100) für die Zirkulation einer Wärmeaustauschflüssigkeit in diesem vorgesehen sind.

3. Abgabevorrichtung nach Anspruch 1 oder 2, gekennzeichnet durch Einrichtungen zum Schutz der Oberflächen des feuerfesten Aufbaus (46) und des Rohres (41), die Innenflächen der Kammer (44) gegenüber schädlicher Umgebung bilden, und die eine Kanaleinrichtung (58) zur Versorgung der Kammer mit einem Reinigungsfluid (P) aufweisen, das bezüglich des Aufbaues und des Rohres relativ inert ist.

4. Abgabevorrichtung nach Anspruch 1, gekennzeichnet durch eine Wärmetauschereinrichtung (88, 100), die beabstandet um das Rohr (41) angeordnet ist, eine Einrichtung (100) zum Transport eines ersten gasförmigen Fluids (WF') in die Wärmetauschereinrichtung in wärmeaustauschender Zuordnung zu dieser und dem Rohr, und durch eine Wärmeisoliereinrichtung (50), die die Wärmetauschereinrichtung umgibt, wobei die Erhitzungseinrichtung (48), die Einrichtung zum Transport des ersten gasförmigen Fluids innerhalb der Wärmetauschereinrichtung und die Wärmeisolationseinrichtung zur Herstellung einer Einrichtung zur Überwachung der Temperatur des thermoplastischen Werkstoffs (11) zusammenwirken, um die gewünschte thermische Homogenität bei dessen Durchtritt durch das Rohr zu schaffen.

5. Abgabevorrichtung nach Anspruch 4, dadurch gekennzeichnet, daß die Einrichtung zum Transport des ersten gasförmigen Fluids (WF') zahlreiche erste Kühlrohre (100) aufweist, die axial in Ausnehmungen (102) in dem feuerfesten Aufbau (46) gehalten und von dem Rohr (41) für die Aufnahme des ersten Fluids beabstandet sind.

6. Abgabevorrichtung nach Anspruch 5, dadurch gekennzeichnet, daß innerhalb der geschlossenen Kammer (44) eine Einrichtung (88) zum Transport eines zweiten gasförmigen Fluids (WF) in wärmeaustauschender Zuordnung zu dem Rohr (41) vorgesehen ist.

7. Abgabevorrichtung nach Anspruch 6, dadurch gekennzeichnet, daß die Einrichtung zum Transport des zweiten Fluids (WF) zahlreiche zweite Kürlrohre (88) aufweist, die axial neben dem Rohr (41) angeordnet und dieses innerhalb der geschlossenen Kammer (44) tangential zentriert.

8. Abgabevorrichtung nach Anspruch 7, dadurch gekennzeichnet, daß die ersten Kühlrohre (100) einen größeren Durchmesser als die zweiten Kühlrohre (88) aufweisen, wobei das erste Betriebsfluid (WF') einen erheblich größeren Anteil der von dem thermoplastischen Werkstoff (11) erzeugten Wärmeaustauschmenge als das zweite Betriebsfluid (WF) befördert und wobei das zweite Betriebsfluid eine größere sofortige Änderung der Wärmemenge als das erste Arbeitsfluid abführt.

9. Abgabevorrichtung nach einem vorangehenden Anspruch, gekennzeichnet durch eine stationäre Schereinrichtung (35), die innerhalb des Rohres (41) für das Homogenisieren der Beschaffenheit des durch diese hindurchtretenden thermoplastischen Materials (11) angeordnet ist.

10. Abgabevorrichtung nach einem vorangehenden Anspruch, dadurch gekennzeichnet, daß das Rohr (41) aus einem korrosionsfesten Material, einem Edelmetall oder dergleichen hergestellt ist.

11. Abgabevorrichtung nach einem der Ansprüche 1 bis 9, dadurch gekennzeichnet, daß das Rohr (41) aus einem Metall aus der aus Molybdän, Wolfram, Tantal, Rhenium, Niobium, Stahl oder dessen Leigierungen und dergleichen bestehenden Gruppe ausgewählt ist.

12. Abgabevorrichtung nach einem vorangehenden Anspruch, dadurch gekennzeichnet, daß die Erhitzungseinrichtung (48) zahlreiche Erhitzungselemente aufweist, die nahe dem Rohr (41) zu dessen Wärmebeaufschlagung angeordnet sind.

13. Abgabevorrichtung nach einem vorangehenden Anspruch, dadurch gekennzeichnet, daß die Erhitzungseinrichtung (48) einen Abschnitt des Rohres (41) umfaßt, der mit einer elektrischen Stromquelle verbunden ist.

14. Abgabevorrichtung nach einem vorangehenden Anspruch, gekennzeichnet durch eine Elektrodeneinrichtung, die in Verbindung mit der Kammer (44) angeordnet ist, um durch den thermoplastischen Werkstoff elektrische Stromwärmeenergie vorzusehen.

15. Abgabevorrichtung nach einem vorangehenden Anspruch, gekennzeichnet durch eine Ausdehnungseinrichtung (30) in Verbindung mit wenigstens einem Ende (29) des Rohres (41), die eine relative Bewegung des Rohres und des Wärmeaustauscheraufbaues durch den thermischen Zyklus der Vorrichtung aufzunehmen vermag.

16. Abgabevorrichtung nach Anspruch 15, dadurch gekennzeichnet, daß die Expansionseinrichtung eine Hülsenverbindung (30) zwischen dem Rohr (41) und der Quelle (10) aufweist.

17. Abgabevorrichtung nach einem vorangehenden Anspruch, gekennzeichnet durch einen Flansch (28), der um den Einlaß (29) oder/und den Auslaß (33) des Rohres (41) herum tragend gekoppelt ist, wobei sich der Flansch von diesem radial nach außen in Verbindung mit dem Aufbau (46) zum dichtenden Verschließen der Kammer (44) erstreckt.

18. Abgabevorrichtung nach Anspruch 17, gekennzeichnet durch eine Flanschkühleinrichtung (73), die mit wenigstens einem Umfangsabschnitt desselben in thermischer Verbindung angeordnet ist.

19. Abgabevorrichtung nach Anspruch 4 oder einem der davon abhängigen Ansprüche 5 bis 18, dadurch gekennzeichnet, daß die Wärmeisolationseinrichtung (50) zur unterschiedlichen Wärmeenergieregulierung längs des Rohres (41) wahlweise um die Wärmeaustauschereinrichtung (88, 100) angeordnet ist.

20. Abgabevorrichtung nach einem vorangehenden Anpruch, gekennzeichnet durch eine Strömungssteuereinrichtung (80, 43) in Verbindung mit dem Rohr (41), die die Strömung des thermoplastischen Werkstoffs (11) aus der Quelle (10) reguliert.

21. Abgabevorrichtung nach Anspruch 20, gekennzeichnet durch wenigstens einen Flansch (64), der tragend um das Rohr (41) herum angeschlossen ist, wobei sich der Flansch radial auswärts zu diesem in Verbindung mit dem Aufbau (46) zur Unterteilung der Kammer (44) in getrennte Abschnitte (44H, 44L) erstreckt.

22. Abgabevorrichtung nach Anspruch 21, dadurch gekennzeichnet, daß der thermoplastische Werkstoff (11) zwischen dem Einlaß (29) und dem Auslaß (33) des Rohrs (41) zum Antreiben des thermoplastischen Werkstoffs in einer Richtung von relativ höherem zu relativ niedrigem hydrostatischen Druck eine hydrostatische Druckdifferenz ausübt, und daß der Flansch (64) die Strömung des thermoplastischen Werkstoffs in der Kammer (44) von einem Trennabschnitt (44H) zu dem anderen (44L) blockiert.

23. Abgabevorrichtung nach Anspruch 21 oder 22, dadurch gekennzeichnet, daß der Flansch (64) einen Kühlkanal (23) in Verbindung mit einer Kühlfluid (F')-Quelle zur Herabsetzung der Temperatur des Flansches unterhalb einer vorgewählten Betriebstemperatur desselben und zur Verringerung der Temperatur des thermoplastischen Materials (11) in der Nähe desselben in der Form aufweist, daß er eine Dichtung zwischen dem Flansch un dem Aufbau (46) bildet.

24. Abgabevorrichtung nach einem der Ansprüche 20 bis 23, dadurch gekennzeichnet, daß die Strömungssteuereinrichtung einen Schacht (43) mit einer Strömungssteuerfläche (84), eine Nadel (80) mit einer Arbeitsfläche (86), die in umgekehrter beabstandeter Zuordnung zu der Strömungssteuerfläche (84) angeordnet ist, und eine Einrichtung (82) zur Regulierung der Stellung der Nadel relativ zu dem Schacht zur Veränderung der beabstandeten Zuordnung zwischen diesen und damit zur Regulierung des hydrostatischen Drucks des thermoplastischen Materials (11) aufweist.

25. Abgabevorrichtung nach Anspruch 24, dadurch gekennzeichnet, daß die Einrichtung zur Regulierung der Stellung der Nadel (80) eine Steuerstange (82) aufweist, die zur reziproken Bewegung der Nadel an einen Abschnitt der Nadel angreift, der gegenüber ihrer Arbeitsfläche (86) liegt.

26. Abgabevorrichtung nach Anspruch 25, dadurch gekennzeichnet, daß die Nadel (80), der Schacht (43) und die Steuerstange (82) aus oxidierbaren feuerfesten Metallen hergestellt sind, die aus der aus Molybdän, Wolfram, Tantal, Rhenium, Niobium, Stahl und dessen Legierung bestehenden Gruppe ausgewählt sind.

27. Abgabevorrichtung nach Anspruch 26, dadurch gekennzeichnet, daß die Steuerstange (82) aus einer gestreckten Stange besteht, die teilweise in den thermoplastischen Werkstoff (11) eintauchbar ist und der Nadel (80) an dem abgewandten Ende der Stange gekoppelt ist, wobei sich die Stange durch eine obere Oberfläche des thermoplastischen Materials einer relativ heißen Umgebung ausgesetzt erstreckt, und wobei zu der Stange weiterhin eine feuerfeste Hülse (Cs), die dieselbe wenigstens über ihren Abschnitt nahe der oberen Oberfläche des thermoplastischen Werkstoffs zur Abschirmung der Stange gegenüber der Umgebung umgibt, und eine Edelmetallabschirmung (Pd) gehören, die die feuerfeste Hülse zu ihrem Schutz gegenüber Korrosion durch das thermoplastische Material abdeckt.

28. Abgabevorrichtung nach einem vorangehenden Anspruch, dadurch gekennzeichnet, daß sie für die Abgabe von geschmolzenem Glas vorgesehen ist.

29. Verfahren zum Konditionieren von thermoplastischem Werkstoff (11), der zwischen einem festen relativ kalten Zustand und einem geschmolzenen relativ heißen Zustand in jedem erdenklichen Zustand vorkommt, bestehend aus folgenden Verfahrensschritten:

Begrenzen des Werkstoffs auf einen ausgewählten Strömungsweg (41), Herstellen einer Kammer (44) um diesen, Leiten des Werkstoffs längs des Strömungswegs von einen Einlaßende (29) zu einem Auslaßende (33) desselben, Regulieren der Wärmeenergieverlustrate von dem Werkstoff längs des Strömungswegs, wobei wenigstens das Wärmen des Werkstoffs oder das Wärmeaustauschen oder das Entfernen von Wärmeenergie vorgenommen wird, die von dem Werkstoff längs des Weges abgegeben wird, dadurch gekennzeichnet, daß der Strömungsweg mit einer konzentrischen ringförmigen Kammer (44) umgeben wird, die in beabstandeter Zuordnung zu dem Strömungsweg Wandungsabschnitte aufweist, welche einen Raum innerhalb der Kammer bilden, und Umgeben des Strömungswegs mit thermoplastischem Werkstoff, um den Strömungsweg innerhalb der Kammer in dem Werkstoff einzutauchen.

30. Verfahren nach Anspruch 29, dadurch gekennzeichnet, daß eine gasförmige Substanz (P) in die Kammer (44) nahe dem Strömungsweg (41) zum Schutz desselben gegenüber einer schädlichen Umgebung eingeführt wird.

31. Verfahren nach Anspruch 29 oder 30, dadurch gekennzeichnet, daß der heiße Werkstoff (11) mit einer relativ ungleichförmigen Temperaturverteilung über den Weg in den Wegeinlaß (29) eingeführt wird, und daß die Temperatur des eingeführten Werkstoffs relativ heiß bis etwa 2100°C ist.

32. Verfahren nach einem der Ansprüche 29 bis 30, dadurch gekennzeichnet, daß die thermische Ausdehnung des Strömungswegs (41) relativ zu dessen Einlaß— und Auslaßenden (29 bzw. 33) aufgenommen wird.

33. Verfahren nach einem der Absprüche 29 bis 32, dadurch gekennzeichnet, daß die Strömung des Werkstoffs (11) längs des Strömungswegs (41) scherend gehemmt wird.

34. Verfahren nach einem der Ansprüche 29 bis 33, dadurch gekennzeichnet, daß bei dem Erhitzen des Werkstoffs (11) das Ergänzen der von dem Werkstoff transportierten Wärme oder/und das Erhitzen des Werkstoffs aus einem kalten, festen in einen geschmolzenen Zustand vorgenommen werden.

35. Verfahren nach einem der Ansprüche 29 bis 34, dadurch gekennzeichnet, daß der Strömungsweg (41) wahlweise isoliert wird, um die Wärmeverlustrate entlang desselben zu regulieren.

36. Verfahren nach einem der Ansprüche 29 bis 35, dadurch gekennzeichnet, daß das Wärmeaustauschen und das Entfernen von durch dem Werkstoff (11) längs seines Strömungswegs (41) abgegebenen Wärme durch eine Einrichtung ausgeführt wird, die wenigstens eine erste und eine zweite Einrichtung (100, 88) zur Beförderung entsprechender Arbeitsfluids (WF, WF') in wärmetauschender Zuordnung mit dem Strömungsweg aufweisen, wobei die erste (100) dieser Einrichtungen einen erheblich größeren Anteil der von dem Werkstoff erzeugten Wärmeaustauschmenge als die zweite Einrichtung (88) befördert, und wobei die zweite Einrichtung eine größere sofortige Änderung der Wärmemenge als die erste Einrichtung abführt.

37. Verfahren nach einem der Ansprüche 29 bis 36, dadurch gekennzeichnet, daß die Strömung des thermoplastischen Werkstoffs (11) außerhalb des Strömungswegs (41) von dessen Einlaßende (29) zu dessen Auslaßende (33) blockiert wird.

38. Verfahren nach einem der Ansprüche 29 bis 37, dadurch gekennzeichnet, daß die Strömung des thermoplastischen Werkstoffs (11) in dem Strömungsweg (41) von seinem Einlaßende (29) zu seinem Auslaßende (33) reguliert wird.

39. Verfahren nach einem der Ansprüche 29 bis 38, dadurch gekennzeichnet, daß der thermoplastische Werkstoff (11) Glas ist.

**Revendications**

1. Appareil de délivrance de four pour le conditionnement de matériau thermoplastique fondu relativement chaud (11) par dissipation contrôlée d'énergie calorifique à partir de celui-ci, comprenant un tuyau (41) pour la délivrance dudit matériau thermoplastique à partir d'une source (10) de celui-ci à un endroit désiré (13) et le conditionnement du matériau en vue de lui conférer une homogénéité et une température désirées à sa délivrance, ledit tuyau (41) comportant une entrée (29) pour la réception dans celui-ci du matériau provenant de ladite source et une sortie (33) pour la délivrance dudit matériau audit endroit désiré, caractérisé en ce qu'il comprend une structure réfractaire (46) disposée autour dudit tuyau (41) et délimitant une chambre (44) qui entoure ledit tuyau et s'étend entre ledit tuyau et ladite structure réfractaire, et un organe de chauffage (48) disposé dans la chambre, entourant le tuyau pour fournir de la chaleur à celui-ci, ladite chambre étant remplie d'une charge de matériau thermoplastique immergeant le tuyau et l'organe de chauffage dans celui-ci.

2. Appareil de délivrance selon la revendication 1, dans lequel ladite structure réfractaire (46) comporte des orifices et des passages de fluide (88, 100) la traversant pour la circulation d'un fluide d'échange de chaleur dans celle-ci.

3. Appareil de délivrance selon la revendication 1 ou 2, caractérisé en outre par des moyens pour la protection des surfaces de la structure réfractaire (46) et du tuyau (41) qui forment des surfaces intérieures de la chambre (44) vis-à-vis d'une ambiance nuisible, comportant des moyens de passage (58) pour amener à ladite chambre un fluide de purge (P) qui est relativement inerte vis-à-vis de la structure et du tuyau.

4. Appareil de délivrance de four selon la revendication 1, comprenant des moyens d'échange de chaleur (88, 100) disposés en relation d'espacement autour dudit tuyau (41), des moyens pour l'acheminement d'un premier fluide gazeux (WF') dans lesdits moyens d'échange de chaleur en relation d'échange de chaleur avec ceux-ci et avec le tuyau, et des moyens thermiquement isolants (50) entourant lesdits moyens d'échange de chaleur, en permettant ainsi audit organe de chauffage (48), auxdits moyens d'acheminement du premier fluide gazeux à l'intérieur desdits moyens d'échange de chaleur et auxdits moyens thermiquement isolants de fonctionner en combinaison pour produire des moyens de réglage de la température du matériau thermoplastique (11) pour créer l'homogénéité de température désirée à mesure qu'il passe à travers ledit tuyau.

5. Appareil de délivrance selon la revendication 4, dans lequel lesdits moyens d'acheminement dudit premier fluide gazeux (WF') comprennent une multiplicité de premiers tubes de refroidissement (100) supportés axialement dans des cavités (102) ménagées dans ladite structure réfractaire (46) et étant disposés à distance dudit tuyau (41) pour véhiculer le premier fluide.

6. Appareil de délivrance selon la revendication 5, comprenant des moyens (88) à l'intérieur de ladite chambre fermée (44) pour l'acheminement d'un second fluide gazeux (WF) en relation d'échange de chaleur avec ledit tuyau (41).

7. Appareil de délivrance selon la revendication 6, dans lequel lesdits moyens d'acheminement du second fluide (WF) comporte une multiplicité de seconds tubes de refroidissement (88) disposés axialement au voisinage du tuyau (41) et centrant tangentiellement celui-ci dans ladite chambre fermée (44).

8. Appareil de délivrance selon la revendication 7, dans lequel les premiers tubes de refroidissement (100) sont de plus grand diamètre que les seconds tubes de refroidissement (88), le premier fluide de travail (WF') transportant une fraction notablement plus forte de la charge d'échange de chaleur produite par la matériau thermoplastique (11) que le second fluide de travail (WF) et le second fluide de travail transportant une plus forte variation instantanée de charge thermique que le premier fluide de travail.

9. Appareil de délivrance selon l'une quelconque des revendications précédentes, caractérisé en outre par des moyens de cisaillement fixes (35) disposés à l'intérieur dudit tuyau (41) à l'effet d'homogénéiser la consistance du matériau thermoplastique (11) traversant celui-ci.

10. Appareil de délivrance selon l'une quelconque des revendications précédentes, dans lequel ledit tuyau (41) est en un matériau résistant à la corrosion, un métal noble ou similaire.

11. Appareil de délivrance selon l'une quelconque des revendications 1 à 9, dans lequel ledit tuyau (41) est en un métal choisi dans le groupe formé par le molybdène, le tungstène, le tantale, le rhénium, le niobium, l'acier ou leurs alliages, et similaires.

12. Appareil de délivrance selon l'une quelconque des revendications précédentes, dans lequel l'organe de chauffage (48) comprend une multiplicité d'éléments chauffants disposés à proximité dudit tuyau (41) pour y fournir un apport de chaleur.

13. Appareil de délivrance selon l'une quelconque des revendications précédentes, dans lequel l'organe de chauffage (48) comprend une portion dudit tuyau (41) reliée à une source d'énergie électrique.

14. Appareil de délivrance selon l'une quelconque des revendications précédentes, comportant des moyens à électrode disposés en communication avec ladite chambre (44) à l'effet de fournir de l'énergie de chauffage par effet Joule dans ledit matériau thermoplastique (11).

15. Appareil de délivrance selon l'une quelconque des revendications précédentes, comportant des moyens de dilatation (30) en communication avec l'une au moins (29) des extrémités dudit tuyau (41) et adaptés à encaisser le movement relatif du tuyau de la structure d'échange de chaleur dû aux cycles thermiques subis par l'appareil.

16. Appareil de délivrance selon la revendication 15, dans lequel lesdits moyens de dilatation comprennent un raccord à manchon (30) entre ledit tuyau (41) et ladite source (10).

17. Appareil de délivrance selon l'une quelconque des revendications précédentes, comportant une bride (28) couplée en relation de support autour de l'entrée (29) et/ou de la sortie (33) dudit tuyau (41), ladite bride s'étendant radialement à l'extérieur de celle(s)-ci en communication avec ladite structure (46) pour fermer la chambre (44) de façon étanche.

18. Appareil de délivrance selon la revendication 17, comportant des moyens de refroidissement (73) de la dride disposés en communication thermique avec au moins une portion circonférentielle de celle-ci.

19. Appareil de délivrance selon la revendication 4, ou selon l'une quelconque des revendications 5 à 18 prises en rattachement à celle-ci, dans lequel les moyens thermiquement isolants (50) sont disposés sélectivement autour des moyens d'échange de chaleur (88, 100) pour régler différentiellement l'energie calorifique le long dudit tuyau (41).

20. Appareil de délivrance selon l'une quelconque des revendications précédentes comprenant en outre des moyens de réglage de débit (80, 83) en communication avec ledit tuyau (41) pour régler le débit du matériau thermoplastique (11) provenant de la source (10).

21. Appareil de délivrance selon la revendication 20, comprenant au moins une bride (64) couplée en relation de support autour du tuyau (41), ladite bride s'étendant radialement à l'extérieur de celui-ci en communication avec la structure (46) à l'effet de segmenter la chambre (44) en portions séparées (44H, 44L).

22. Appareil de délivrance selon la revendication 21, dans lequel le matériau thermoplastique (11) exerce une différence de pression hydrostatique entre l'entrée (29) et la sortie (33) du tuyau (41) pour pousser le matériau thermoplastique dans une direction allant des pressions hydrostatiques relativement fortes aux pressions hydrostatiques relativement faibles, et la bride (64) bloque l'écoulement du matériau thermoplastique se trouvant dans le chambre (44) de l'une des portions séparées (44H) à l'autre (44L).

23. Appareil de délivrance selon la revendication 21 ou 22, dans lequel la bride (64) comporte un passage de refroidissement (73) en communication avec une source de fluide de refroidissement (F) afin d'abaisser la température de la bride au-dessous d'une température de fonctionnement sélectionnée de celle-ci et de ramener la température du matériau thermoplastique (11) au voisinage de celle-ci en sorte qu'il forme un joint étanche entre la bride et la structure (46).

24. Appareil de délivrance selon l'une quelconque des revendications 20 à 23, dans lequel le dispositif de réglage du débit comprend une cage (43) comportant une surface de réglage de l'écoulement (84), un pointeau (80) présentant une surface active (86) placée en relation d'écartement à va-et-vient par rapport à ladite surface de réglage de l'écoulement (84), et des moyens (82) de réglage de la position du pointeau par rapport à la cage à l'effet de faire varier la relation d'écartement entre ceux-ci et de régler ainsi la pression hydrostatique du matériau thermoplastique (11).

25. Appareil de délivrance selon la revendication 24, dans lequel les moyens de réglage de la position du pointeau (80) comprennent une tige de commande (82) coopérant avec une portion du pointeau en opposition à la surface active (86) de celui-ci pour faire mouvoir ledit pointeau en va-et-vient.

26. Appareil se délivrance selon la revendication 25, dans lequel ledit pointeau (80), ladite cage (43) et ladite tige de commande (82) sont formés de métaux réfractaires oxydables choisis dans le groupe formé par le molybdène, le tungstène, le tantale, le rhénium, le niobium, l'acier et leurs alliages.

27. Appareil de délivrance selon la revendication 26, dans lequel ladite tige de commande (82) comprend une tige de forme allongée adaptée à être plongée partiellement dans le matériau thermoplastique (11) et accouplée au pointeau (80) à une extrémité distale de ladite tige, ladite tige traversant une surface supérieure du matériau thermoplastique pour être exposée à une ambiance relativement chaude, ladite tige comportant en outre un manchon réfractaire (Cs) l'entourant sur au moins une portion de celle-ci près de la surface supérieure du matériau thermoplastique à l'effet de protéger la tige de l'ambiance, et une gaine (Pt) en métal noble couvrant le manchon réfractaire à l'effet de protéger celui-ci de la corrosion par le matériau thermoplastique.

28. Appareil de délivrance selon l'une quelconque des revendications précédentes, adapté à la délivrance de verre fondu.

29. Procédé de conditionnement de matériau thermoplastique (11) existant dans un état pratiquement quelconque entre un état solide relativement froid et un étant fondu relativement chaud comprenant les opérations consistant à confiner le matériau dans un trajet d'écoulement sélectionné (41), à former une chambre (44) autour de celui-ci, a conduire le matériau le long du trajet d'écoulement d'une extrémité d'entrée (29) à une extrémité de sortie (33) de celui-ci, a régler la vitesse de dissipation d'energie calorifique par le matériau le long dudit trajet d'écoulement en incluant au moins l'une des opérations de chauffage dudit matériau et d'échange de chaleur et d'élimination d'energie calorifique cédée par ledit matériau le long dudit trajet, caractérisé en ce que l'on entoure le trajet d'écoulement par une chambre annulaire concentrique (44) comportant des portions de paroi situées à distance dudit trajet d'écoulement, lesdites portions de paroi délimitant un espace à l'intérieur de ladite chambre, et en ce que l'on entoure le trajet d'écoulement par du matériau thermoplastique afin d'immerger le trajet d'écoulement dans ledit matériau à l'intérieur de ladite chambre.

30. Procédé selon la revendication 29, comportant l'opération d'introduction d'une substance gazeuse (P) dans ladite chambre (44) à proximité immédiate dudit trajet d'écoulement (41) à l'effet de protéger celle-ci d'une ambiance nuisible.

31. Procédé selon la revendication 29 ou 30, comportant l'opération d'introduction dudit matériau chaud (11) à l'entrée (29) du trajet avec une distribution de températures relativement non uniforme d'un côté à l'autre dudit trajet et dans laquelle la température du matériau introduit est relativement chaude jusqu'à environ 2100°C.

32. Procédé selon l'une quelconque des revendications 29 à 30 comportant l'opération d'encaissement de la dilatation thermique du trajet d'écoulement (41) par rapport aux extrémités d'entrée (29) et de sortie (33) de celui-ci.

33. Procédé selon l'une quelconque des revendications 29 à 32, comportant l'opération consistant à entraver par cisaillement l'écoulement dudit matériau (11) le long dudit trajet d'écoulement (41).

34. Procédé selon l'une quelconque des revendications 29 à 33, dans lequel l'operation de chauffage du matériau (11) comporte l'une au moins des opérations d'apport d'un supplément à la chaleur véhiculée par ledit matériau et de chauffage du matériau faisant passer celui-ci d'un état solide froid à un état fondu.

35. Procédé selon l'une quelconque des revendications 29 à 34, dans lequel le trajet d'écoulement (41) est sélectivement isolé pour régler le taux de dissipation de chaleur le long de celui-ci.

36. Procédé selon l'une quelconque des revendications 29 à 35, dans lequel l'opération d'échange de chaleur et d'élimination de la chaleur cédée par ledit matériau (11) le long dudit trajet d'écoulement (41) est effectuée par des moyens comprenant au moins un premier et un deuxième moyens (100, 88) propres à amener des fluides de travail respectifs (WF, WF') en relation d'échange de chaleur avec le trajet d'écoulement, le premier (100) desdits moyens transportant une fraction notablement plus grande de la charge d'échange de chaleur produite par le matériau que le deuxième moyen (88), ledit deuxième moyen transportant une plus forte variation instantanée de charge thermique que le premier moyen.

37. Procédé selon l'une quelconque des revendications 29 à 36, comprenant en outre l'opération de blocage de l'écoulement dudit matériau thermoplastique (11) à l'extérieur du trajet d'écoulement (41) de l'extrémité d'entrée (29) à l'extrémité de sortie (33) de celui-ci.

38. Procédé selon l'une quelconque des revendications 29 à 37, comportant en outre l'opération de réglage de l'écoulement du matériau thermoplastique (11) dans le trajet d'écoulement (41) de l'extrémité d'entrée (29) à l'extrémité de sortie (33) de celui-ci.

39. Procédé selon l'une quelconque des revendications 29 à 38, dans lequel le matériau thermoplastique (11) est du verre.

FIG. I

0 060 692

**Fig. 2**